# EUROPÄISCHE PATENTANMELDUNG

(11) **EP 2 890 057 A1**
(43) Veröffentlichungstag der Anmeldung: **01.07.2015**
(21) Anmeldenummer: 13199818.9
(22) Anmeldetag: 30.12.2013
(51) Int. Cl.: H04L 12/28, H04L 12/24

(54) **Nutzerunterstützung bei der Heimautomatisierung**

(71) Anmelder: Deutsche Telekom AG, 53113 Bonn (DE)
(72) Erfinder: Kraft, Andreas, 14129 Berlin (DE); Sträter, Werner, 12047 Berlin (DE); Wittig, Marcus, 14482 Potsdam (DE); Jenschar, Thomas, 13503 Berlin (DE)
(74) Vertreter: Brandt & Nern Patentanwälte

(57) **Zusammenfassung**

Die vorgeschlagene Lösung unterstützt einen Nutzer eines Systems der Heimautomatisierung vorzugsweise zumindest bei der Einbeziehung einer neuen Komponente (4) in das System. Die Lösung geht von einem System der Heimautomatisierung aus, bei welchem Komponenten (4) des Systems durch eine ihnen zugeordnete ID eindeutig identifizierbar sind. Diese ID wird für mit dem System betreibbare Komponenten (4) entsprechend einer vorgegebenen Codierungsvorschrift in einem wenigstens zweidimensionalen Code codiert.

Zur Vornahme einer Änderung an der Systemkonfiguration wird durch einen Nutzer mittels eines mindestens einen optischen Sensor (2) und eine Verarbeitungseinrichtung aufweisenden, mit einem Geräte-Management des Systems (1) verbindbaren Geräts ein nach der Codierungsvorschrift erzeugter Code erfasst, welcher die ID einer jeweiligen mit dem System betreibbaren Komponente (4) und weitere Informationen zu dieser Komponente enthält. Gesteuert durch eine von der Verarbeitungseinrichtung des mit dem optischen Sensor (2) ausgestatteten Geräts ausgeführte Programmanwendung (3) werden der Code decodiert und darin enthaltene Informationen an das Geräte-Management (1) oder/und an eine andere Komponente des Systems übertragen.

## Beschreibung

Die Erfindung betrifft ein Verfahren und ein System zur Unterstützung eines Nutzers der Heimautomatisierungstechnik. Sie bezieht sich hierbei insbesondere auf ein Verfahren, durch welches der Nutzer beim Hinzufügen neuer Komponenten oder beim Austausch von Komponenten in einem bestehenden System der Heimautomatisierung sowie bei der Konfiguration der betreffenden Komponenten beziehungsweise des Systems insgesamt unterstützt wird. Neben dem Verfahren ist Gegenstand der Erfindung eine spezielle Ausgestaltung eines solchen Systems zur Heimautomatisierung in der Weise, dass dieses zur Durchführung des Verfahrens geeignet ist.

Bekannte Systeme der Heimautomatisierung sind gekennzeichnet durch integrierte Mess-, Informations- und Automatisierungstechnik. Sensoren und Messgeräte sammeln Informationen über Zustände und Vorgänge in mit Einrichtungen der Heimautomatisierten ausgestatteten Gebäuden oder Räumen, wie Wohnungen, Einfamilienhäusern oder Büros, und geben diese Informationen über ein Kommunikationsnetzwerk an eine zentrale Steuerungseinheit weiter. Die Steuerungseinheit nimmt die Informationen auf, speichert diese, wertet sie aus und trifft auf ihrer Grundlage Entscheidungen zur Steuerung von Komponenten beziehungsweise Geräten des Systems oder/und über gegebenenfalls für Nutzer des Systems auszugebende Informationen oder Warnungen. Zur automatisierten Steuerung von Komponenten sendet die zentrale Steuerungseinheit entsprechende Befehle an deren Bedienelemente und Aktoren aus.

Üblicherweise erfolgt die Anbindung von Sensoren und Aktoren an ein jeweiliges System drahtlos in spezifischen Frequenzbändern oder drahtgebunden über eine spezielle Verkabelung. Denkbar ist hierbei die Verwendung von Internettechniken, wie beispielsweise LAN/WLAN und IP. Aber auch von Meshprotokolle oder andere Protokolle kommen in Betracht. Eine Schwierigkeit besteht dabei in der Vielfalt verfügbarer Sensoren mit unterschiedlichen Funktionen, wobei häufig Sensoren verschiedener Hersteller in ein Gesamtsystem integriert werden müssen. Dies ist nicht immer ohne weiteres möglich und daher selbst für damit befasste Techniker häufig wenig komfortabel, stellt aber insbesondere Nutzer, welche ihr System selbst konfigurieren, aktualisieren oder ausbauen möchten, oft vor größere Probleme. Sensoren können beispielweise zur Erfassung folgender Sachverhalte und Größen dienen: Temperatur, Bewegung (zum Beispiel Bewegungsmelder oder Videokamera), Feuchtigkeit, Rauch, Gas, Licht, Wind, Geräusche (zum Beispiel Mikrofon). Ferner müssen Aktoren zur Steuerung von Komponenten in das Haussystem integriert werden. Dazu gehören Schalter, Dimmer, Motoren für die Steuerung von Fenstern oder Jalousien, elektrische Heizkörperregler, elektro-magnetische Türöffner und dergleichen mehr.

Für den Nutzer heute verfügbarer Systeme der Heimautomatisierung ist insoweit deren Konfiguration beziehungsweise die Konfiguration ihrer Komponenten, nämlich der Aktoren und Sensoren, schwierig. Dabei müssen die unterschiedli-chen Komponenten bei ihrem Ersteinsatz im System dem System "bekannt gemacht" und dann konfiguriert werden müssen. Auch kann es sich aus unterschiedlichen Gründen erforderlich machen, ein bereits bestehendes System erneut beziehungsweise zu rekonfigurieren. Aus Sicherheitsgründen, teilweise aber auch aus technischen Gründen können und werden Plug-and-Play-Verfahren hierfür nicht angewendet. So soll und muss ein menschlicher Nutzer beispielsweise explizit zustimmen, wenn eine Komponente in das System neu aufgenommen werden soll.

Die Bekanntmachung einer neuen Komponente (eines Sensors oder Aktors) gegenüber dem System kann beispielsweise mittels eines speziellen Lesegeräts geschehen, in das der Nutzer die ID der Komponente/des Geräts eintippen muss oder das ihm eine Liste von IDs bekanntmachungswilliger Komponenten anzeigt, die er mit der auf dem Gerät oder der Verpackung aufgedruckten ID vergleicht. Dies ist jedoch für den Benutzer aufwendig beziehungsweise umständlich, wobei diese Vorgehensweise auch fehleranfällig ist. Noch komplizierter und aufwendiger ist die Abbildung verschiedener Szenarien im System für dessen Nutzung, das heißt die Verknüpfung von mehreren Sensoren und Aktoren zu einem übergreifenden Anwendungsfall.

Aufgabe der Erfindung ist es daher, eine Lösung bereitzustellen, welche den Nutzer eines Systems zur Heimautomatisierung dahingehend unterstützt, dass für ihn das Hinzufügen neuer Komponenten in ein bestehendes System der Heimautomatisierung sowie, entsprechend bevorzugter Weiterbildungen dieser Lösung, das Konfigurieren solcher Komponenten erleichtert wird. Hierzu sind ein Verfahren anzugeben und ein System der Heimautomatisierung in der Weise auszubilden, dass dieses zur Durchführung des Verfahrens geeignet ist.

Die Aufgabe wird durch ein Verfahren mit den Merkmalen des Patentanspruchs 1 gelöst. Ein die Aufgabe lösendes, zur Durchführung des Verfahrens geeignetes System der Heimautomatisierung ist durch den ersten Sachanspruch charakterisiert. Vorteilhafte Aus- beziehungsweise Weiterbildungen der Erfindung sind durch die jeweiligen Unteransprüche gegeben.

Das zur Lösung der Aufgabe vorgeschlagene Verfahren geht von einem System der Heimautomatisierung aus, bei welchem Komponenten des Systems durch eine ihnen zugeordnete ID eindeutig identifizierbar sind. Gemäß dem Verfahren wird die ID mit dem System betreibbarer Komponenten entsprechend einer für die Nutzung des Verfahrens mit dem betreffenden System vorgegebenen Codierungsvorschrift in einem wenigstens zweidimensionalen Code codiert. Es müssen jedoch nicht alle mit dem System nutzbaren Komponenten eine solche ID aufweisen und ferner muss nicht jede eine Komponente des Systems bezeichnende ID in beziehungsweise durch einen entsprechend dem Verfahren vorgesehenen Code codiert sein. Jedoch gelten die Erfordernisse einer ID und einer Codierung dieser ID in dem wenigstens zweidimensionalen Code zumindest für solche mit dem System nutzbare Komponenten, wie insbesondere Sensoren oder Aktoren, für die eine Unterstützung des Nutzers beim Betreiben des Systems der Heimautomatisierung entsprechend der Erfindung gegeben sein soll. Andererseits müssen beispielsweise Komponenten, welche gewissermaßen zum Systemkern gehören und daher nicht nur optional vorhanden oder ohne Weiteres austauschbar sind, nicht über eine entsprechende ID verfügen oder deren ID nach der für die Nutzung des Verfahrens mit dem System vorgegebenen Codierungsvorschrift codiert sein. Zudem können vorzugsweise auch Komponenten in das System einbezogen werden, die zwar für diesen Zweck über eine ID identifizierbar sind, für die aber kein entsprechender die ID aufnehmender Code verfügbar ist.

Die Charakterisierung einer ID als für die Nutzung des Verfahrens mit dem (betrachteten) System geeignet, bezieht sich darauf, dass nach einer bestimmten Codierungsvorschrift erzeugte Codierungen zwar grundsätzlich zur Durchführung eines Verfahrens entsprechend der Erfindung geeignet sein können, aber möglicherweise nur im Zusammenhang mit bestimmten Systemen oder mit einer Klasse von Systemen, nicht jedoch zur Nutzung mit dem augenblicklich betrachteten System. Demnach können auch im Zusammenhang mit der Nutzung von verschiedenen Systemen oder Klassen von System im Kontext der Erfindung unterschiedliche jeweils immer nur für eine bestimmte Klasse von Systemen geeignete Codierungen beziehungsweise Codierungsvorschriften zum Einsatz gelangen.

Zur Vornahme einer Änderung an der Systemkonfiguration, welche mindestens eine zur Durchführung des Verfahrens ausgebildete Komponente mit einer entsprechend codierten ID betrifft, wird durch einen beim Betreiben des Systems unterstützen Nutzer mittels eines mindestens einen optischen Sensor und eine Verarbeitungseinrichtung aufweisenden, mit einem Geräte-Management des Systems verbindbaren Geräts ein nach der vorgenannten Codierungsvorschrift erzeugter Code erfasst. Dies erfolgt gesteuert durch eine von der Verarbeitungseinrichtung dieses Geräts ausgeführte Programmanwendung. Der mittels des optischen Sensors erfasste Code enthält zumindest die ID einer mit dem System betreibbaren Komponente und weitere Informationen zu dieser Komponente, wie beispielsweise Informationen zu Art und Typ der Komponente oder auch Informationen mit Einstellungsparametern zur Konfiguration der Komponente. Durch die zuvor erwähnte Programmanwendung werden in dem mittels des optischen Sensors erfassten Code enthaltene Informationen decodiert und nach ihrer Decodierung an das Geräte-Management oder/und an eine andere Komponente des Systems, nämlich vorzugsweise an die vorgenannte Komponente selbst, übertragen. Soweit hierbei und im Patentanspruch 1 "von Informationen" und nicht "von den Informationen" zu einer (oder gegebenenfalls, wie später noch auszuführen sein wird, auch mehreren) durch die ID identifizierten Komponente gesprochen wird, meint dies, dass es sich im Falle dessen, dass Informationen zu der Komponente sowohl an das Geräte-Management als auch an eine andere Komponente übertragen werden, nicht um dieselben Informationen handeln muss. So können beispielsweise zunächst Informationen (einschließlich der ID), welche das Hinzufügen einer Komponente zum System ermöglichen an das Geräte-Management und nachfolgend Informationen (einschließlich der ID), welche der Konfiguration der hinzugefügten Komponente dienen an eine andere Komponente des Systems (also nicht an das Geräte-Management, sondern insbesondere an die hinzugefügte Komponente selbst) übertragen werden.

Zum Einlesen eines den Nutzer beim Betreiben des Systems der Heimautomatisierung unterstützenden, nach der Codierungsvorschrift für die Nutzung des Verfahrens mit dem System erzeugten Codes wird entsprechend einer möglichen Verfahrensgestaltung ein mobiles Endgerät verwendet, durch dessen Verarbeitungseinheit auch die Programmanwendung zum Einlesen des Codes sowie zur Decodierung und Übertragung darin enthaltener Informationen verarbeitet wird. Hierbei kann es sich um ein Smartphone oder ein Tablet-PC handeln, auf welchem die Programmanwendung in Form einer entsprechenden Minianwendung beziehungsweise App ausgeführt wird und bei welchem der mindestens eine optische Sensor in Form einer Kamera ausgebildet ist. Wie aber im Zusammenhang mit der Erläuterung zur Ausbildung des die Aufgabe lösenden Systems noch genauer ausgeführt werden soll, kann es sich bei diesem Gerät auch um eine spezielle Komponente des Systems der Heimautomatisierung selbst handeln.

Das vorgeschlagene Verfahren unterstützt einen Nutzer eines Systems der Heimautomatisierung vorzugsweise zumindest bei der Einbeziehung einer neuen Komponente in das System. Hierbei wird ein für die betreffende Komponente nach der Codierungsvorschrift für die Nutzung des Verfahrens mit dem System erzeugter Code mittels des vorgenannten Geräts, vorzugsweise mittels eines mit einer Kamera ausgestatteten mobilen Endgeräts des Nutzers, eingelesen. Die in dem Code enthaltene Information wird, wie bereits ausgeführt, veranlasst durch die von der Verarbeitungseinheit des zum Einlesen des Codes verwendeten Geräts verarbeitete Programmanwendung beziehungsweise App, decodiert und darin enthaltene Informationen an das Geräte-Management des Systems übertragen. Dies geschieht in Rahmen eines Pairings, bei dem zumindest die dem System hinzuzufügende Komponente dem dazu in einen Pairing-Modus versetzten Geräte-Management bekannt gemacht wird. Neben der ID der betreffenden (hinzuzufügenden) Komponente werden hierbei zusätzlich Informationen zur Art (zum Beispiel Geräteklasse und Typ, Sensortyp und dergleichen) dieser Komponente an das Geräte-Management übertragen.

Sofern die gewählte Technologie für das System beziehungsweise für das Pairing seiner Komponenten mit dem (bestehenden) System, nämlich insbesondere mit dem Geräte-Management, ein gegenseitiges Pairing erfordert, wird die dem System hinzuzufügende Komponente ebenfalls in einen Pairing-Modus versetzt. Mittels des zum Einlesen des Codes, zu dessen Decodierung sowie zur Übertragung darin enthaltener Informationen an das Geräte-Management verwendeten mobilen Endgeräts werden dabei Informationen, welche im Zuge der Bekanntmachung der neuen Komponente gegenüber dem System gewissermaßen als Antwort vom Geräte-Management empfangen werden, an die hinzuzufügende Komponente übertragen.

Über die Einbeziehung neuer Komponenten in das System der Heimautomatisierung hinaus oder unabhängig davon kann der Nutzer des Systems durch die erfindungsgemäße Lösung auch bei der Konfiguration einer bereits in das System einbezogenen Komponente unterstützt werden, nämlich insbesondere bei der Einstellung von Betriebsparametern oder bei der Aktivierung/Deaktivierung optional nutzbarer Funktionen. In diesem Falle enthält der mittels des dafür vorgesehenen Geräts einzulesende, mindestens zweidimensionale Code neben der eindeutigen Geräte-ID der zu konfigurierenden Komponente Setup- beziehungsweise Informationen mit Konfigurierungsdaten, welche durch die schon mehrfach angesprochene Programmanwendung (App) nach ihrer Decodierung an das Geräte-Management des Systems und/oder an die zu konfigurierende Komponente direkt übertragen werden. Im erstgenannten Falle werden diese der Konfigurierungsinformationen durch das Geräte-Management zur Kon-figurierung der entsprechenden Komponente verwendet und außerdem, bei-spielsweise für eine eventuell später erneut erforderliche Konfigurierung, in einer Backendeinrichtung des Systems in Zuordnung zu der ID der zugehörigen Komponente gespeichert. Im Falle einer Übermittlung der Konfigurierungsinformationen direkt an die zu konfigurierende Komponente kann die betreffende Komponente dazu ausgebildet sein, diese Konfigurierungsdaten selber zu verarbeiten und sie vorzugsweise außerdem an das Geräte-Management zur Abspeicherung in der schon erwähnten Backendeinrichtung zu übertragen.

Entsprechend einer besonders vorteilhaften Weiterbildung ermöglicht es das erfindungsgemäße Verfahren darüber hinaus, das System insgesamt im Hinblick auf die das Verfahren unterstützenden Komponenten zu konfigurieren. In diesem Falle werden in dem wenigstens zweidimensionalen Code Informationen codiert, welche gewissermaßen ein Szenario abbilden, nämlich Informationen zur Konfigurierung einer Mehrzahl mit dem System betriebener Komponenten in Zuordnung zu deren jeweiliger ID. Dies bezieht sich insbesondere auf die Einstellung der betreffenden Komponente für ausgewählte Anwendungsfälle, das heißt Nutzungsumgebungen und/oder Nutzungssituationen. Bei den in dem Code enthaltenen Informationen handelt es sich demgemäß um entsprechende Einstellparameter.

Die zuletzt beschriebene Ausbildungsform kann ferner noch dadurch weitergebildet sein, dass der zur Konfiguration des Systems beziehungsweise seiner Komponenten verwendete Code durch eine zum System gehörende Komponente erzeugt wird. Entsprechend einer vorgesehenen Verfahrensgestaltung ist es dabei möglich, dass ein Nutzer des Systems die das Verfahren unterstützenden Komponenten zunächst manuell selbst konfiguriert. Die im Zuge dessen in dem System, das heißt in einem dafür ausgebildeten Speicher abgelegten Konfigurationsinformationen werden dann durch eine speziell ausgebildete, zu dem System gehörende, also mit dem Geräte-Management gekoppelte Komponente verarbeitet, wobei aus diesen Informationen und den mit ihnen jeweils korrespondierenden IDs nach der dafür vorgesehenen Codierungsvorschrift der mindestens zweidimensionale Code erzeugt wird. Dieser wird schließlich über ein Display der den Code erzeugenden Komponente und/oder über einen zu dieser Komponente gehörenden oder unmittelbar mit ihr verbundenen Drucker ausgegeben. Der ausgegebene Code kann für eine eventuell erneut erforderlich werdende Konfiguration des Systems beziehungsweise seiner Komponenten mittels eines mit der entsprechenden Programmanwendung (App) ausgestatteten Geräts des Nutzers direkt von dem zur Ausgabe dienenden Display eingelesen und abgespeichert oder gegebenenfalls später aus dem mittels des Druckers erzeugten Ausdruck wieder eingelesen werden. Dabei können der erzeugte Code der seiner Erzeugung dienenden Komponente selbst wieder präsentiert werden oder aber mittels eines mobilen Endgeräts (Smartphone oder Tablet-PC) des Nutzers eingelesen, durch die App decodiert und schließlich die darin enthaltenen Informationen an das System übertragen werden.

Ein die Aufgabe lösendes, zur Durchführung des Verfahrens geeignetes System der Heimautomatisierung umfasst mindestens ein Geräte-Management sowie einen von dem Geräte-Management verwalteten Speicher mit Daten beziehungsweise Konfigurierungsinformationen zum System gehörender Komponenten. Mindestens einige der zum System gehörenden Komponenten oder der dem System hinzuzufügenden Komponenten sind durch eine ihnen zugeordnete eindeutige ID identifizierbar. Die ID mit dem System betreibbarer Komponenten ist analog zum Verfahren entsprechend einer für das System vorgegebenen Codierungsvorschrift in einem wenigstens zweidimensionalen Code codiert, welcher mittels eines mit dem Geräte-Management des Systems verbindbaren, mit mindestens einem optischen Sensor und einer Verarbeitungseinrichtung ausgestatteten Geräts auslesbar ist. Dabei ist die Verarbeitungseinrichtung des vorgenannten, mit dem mindestens einen Sensor ausgestatteten Geräts zur Ausführung einer Programmanwendung beziehungsweise App ausgebildet, nach deren Start der mindestens eine Sensor zum Auslesen des Codes aktiviert, die in einem mittels des mindestens einen Sensors eingelesenen Code enthaltenen Informationen decodiert und diese Informationen an das Geräte-Management oder/und an eine Komponente des Systems übertragen werden, auf welche sich die Informationen beziehen.

Bei dem beziehungsweise einem mit dem Geräte-Management verbindbaren, zum Auslesen des Codes geeigneten Gerät handelt es sich entsprechend einer Ausbildungsform der Erfindung um ein mit einer entsprechenden Programmanwendung ausgestattetes mobiles Endgerät des Nutzers, beispielsweise um ein Smartphone oder einen Tablet-PC. Hierbei ist der mindestens eine Sensor, mit welchem der Code für eine hinzuzufügende Komponente oder für eine oder mehrere zu konfigurierende Komponenten erfasst wird, in Form einer Kamera des Gerätes ausgebildet.

Eine alternativ vorgesehene oder mit der zuvor beschriebenen Ausbildungsform kombinierbare Möglichkeit ist dadurch gegeben, dass eine (gewissermaßen stationäre) Komponente des Systems mit einem Sensor zum Einlesen des Codes und mit einer Verarbeitungseinheit zur Verarbeitung der das Lesen des Codes, dessen Decodierung und die Übertragung der Daten an das Geräte-Management ermöglichenden Programmanwendung ausgebildet ist. Dabei ist die betreffende Komponente entsprechend einer vorteilhaften Weiterbildung außerdem zur Erzeugung eines Codes entsprechend der für das System vorgegebenen Codierungsvorschrift ausgebildet, nämlich zur Erzeugung eines Codes in welchem IDs und Konfigurationsdaten für mehrere Komponenten des Systems codiert sind. Vorzugsweise verfügt die betreffende Komponente zudem über ein Display und/oder über einen Drucker zur Ausgabe eines von ihr erzeugten Codes. Letzteres ist dabei so zu verstehen, dass ein Display und/oder ein Drucker Bestandteil dieser Komponente oder ihr zugeordnet ist.

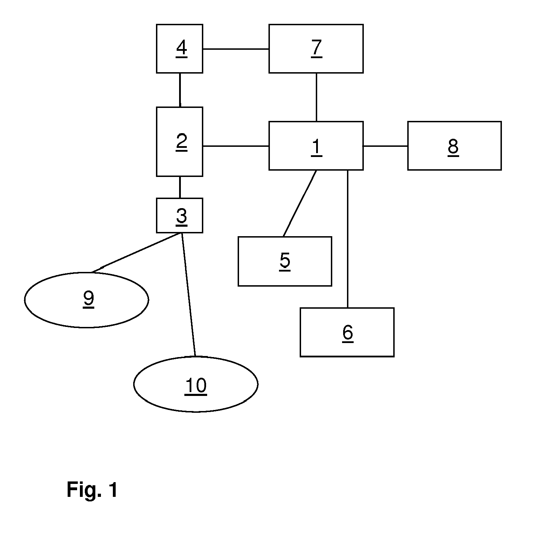

Anhand der Fig. 1 sollen ein Ausführungsbeispiel für das erfindungsgemäße System gegeben und, im Hinblick auf dessen Nutzung, dabei auch nochmals verfahrensbezogene Aspekte der Erfindung erläutert werden.

Das dargestellte Beispiel bezieht sich auf ein Anwendungsszenario im Bereich Smart Home und hierbei auf die Heimautomatisierung. Aktoren und Sensoren werden unter dem Begriff Komponente 4 zusammengefasst und sind in der Figur durch ein entsprechendes Symbol abgebildet. Die physische Kommunikation zwischen den Komponenten 4 und dem Systemkern, nämlich insbesondere dem Geräte-Management 1 übernimmt die Einheit Geräte-Kommunikation 7, welche lokal vorhanden ist. Die Geräte-Kommunikation 7 ist demgemäß mit dem Geräte-Management 1 verbunden, welches im Wesentlichen in Software implementiert ist und die logische Ansteuerung der Aktoren beziehungsweise den Empfang von Informationen mit Werten zu den durch die Sensoren erfassten Größen übernimmt. Das Geräte-Management 1 kann lokal vorhanden sein oder auch beispielsweise als Teil einer Cloud-Lösung remote über ein Weitverkehrsnetz agieren. Vorhanden ist demgemäß eine Einsatzumgebung, in welcher unterschiedliche Komponenten 4 (Aktoren/Sensoren) installiert sind oder installiert werden sollen. Die verschiedenen Komponenten 4 kommunizieren, wie bereits ausgeführt, vorzugsweise über die Geräte-Kommunikation 7 mit dem Geräte-Management 1.

Zusätzlich zu diesen üblichen Elementen einer Haussteueranlage zur Heimautomatisierung wird mit dem System gemäß der Erfindung auch ein mobiles Endgerät eines Nutzers verwendet, bei welchem es sich um ein Smartphone oder um ein Gerät mit vergleichbaren Eigenschaften handelt, das mit einer einen optischen Sensor 2 ausbildenden Kamera, mit einer Verarbeitungseinheit und mit einer von dieser Verarbeitungseinheit ausführbaren Programmanwendung 3 (App) zur Steuerung der Abläufe des erfindungsgemäßen Verfahrens ausgestattet ist. Ferner ist Bestandteil des in der Fig. 1 beispielhaft gezeigten Systems ein Drucker 6 zum Ausdrucken eines zweidimensionalen Codes, in dem mindestens eine ID und weiteren Informationen (wie Art und Typ) zu einer in das System einzubeziehenden Komponente 4 oder zur Konfiguration mindestens einer Komponente 4 des Systems codiert sind. Zentralseitig, das heißt dem Systemkern zugehörig, sind Bestandteile des beispielhaft gezeigten Systems außerdem eine Einheit 5 zur Speicherung von Status- beziehungsweise Zustandsinformationen von Komponenten 4, also insbesondere von Sensoren und Aktoren, und Backendeinrichtungen 8.

Eine neue Komponente 4 wird in das System wie nachfolgend dargestellt einbezogen, das heißt dem System im Zuge eines Pairings bekannt gemacht. Für das zu erläuternde Beispiel wird dabei davon ausgegangen, dass alle neu in das System einzubeziehenden Komponenten/Geräte mit einem zweidimensionalen Code (im weiteren auch 2D-Code), welcher das Gerät eindeutig identifiziert beziehungsweise repräsentiert, bedruckt sind. Das Smartphone des Nutzers ist mit der softwarebasierten App 3 ausgestattet und über diese mit dem Geräte-Management 1 verbunden. Physisch kann diese Verbindung auf der Basis herkömmlicher Technologie (webbasierte Internettechnologie) oder auch mittels entsprechender Technologie der Heimautomatisierungsanlage selbst realisiert werden. Eine neu zu installierende Komponente 4 wird dann dem System wie folgt bekannt gemacht und im Zusammenhang damit gewissermaßen zur Verwendung mit dem System angelernt. Zunächst werden sowohl die neue Komponente 4 als auch das Geräte-Management 1 in den Pairing-Modus versetzt. Anschließend werden der 2D-Code mit Hilfe des durch das Starten der App 3 aktivierten Sensors 2, also der Kamera des Smartphones, abfotografiert und durch die App 3 erkannt sowie die darin enthaltenen Informationen über die Verbindung des Smartphones an das Geräte-Management 1 übertragen, welches dann das lokale Pairing vornimmt. Damit ist eine Verbindung (Pairing) eine Kopplung der neuen Komponente 4 mit dem System und dessen Geräte-Management 1 hergestellt. Macht die gewählte Technologie eine gegenseitiges Pairing erforderlich läuft dieser Prozess vice versa ab. Zusätzlich, das heißt optional besteht die Möglichkeit die eindeutige ID der hinzugefügten Komponente 4 für die Kontaktaufnahme und die weitere Konfiguration der Komponente 4 in dem Backend 8 näher zu spezifizieren. Neben dem Pairing-Code (Haus-Code oder ähnliches) können somit auch tiefergehende Details konfiguriert werden, bis hin zur Einstellung und Anpassung der Frequenzen für die Kommunikation zwischen der Komponente 4 und dem Geräte-Management 1. Diesbezüglich ist das Backend 8 als ein sortiertes Register aller Identifier beziehungsweise IDs und der ihnen zur jeweiligen Komponente zugeordneten Informationen zu verstehen.

Wie ausgeführt, sind gemäß dem Beispiel sämtliche Komponenten 4 mit einem individuellen 2D-Code (Data-Matrix, QR-Code oder ähnliches) beschriftet. Diese Beschriftung ermöglicht die weitestgehend automatische Konfiguration der Komponenten 4 im Geräte-Management 1 auf der Grundlage abgelegter Konfigurationsdaten 9. Hierzu wird wiederum die App 3 auf dem mit dem Sensor 2 beziehungsweise der Kamera ausgestatteten Smartphone benutzt. Mit dieser wird der 2D-Code eingelesen, das Pairing durchgeführt und der Aktor oder Sensor (Komponente 4) konfiguriert. Auch Wartungsfälle, das heißt hier das "temporäre Entfernen" von Komponenten 4 beziehungsweise deren Ersetzen durch andere lassen sich damit leichter realisieren. Dazu kann beispielsweise in einem Wartungsmenü des Geräte-Managements 1 eine Funktion "Ersetzen" ausgewählt und dann der 2D Code der alten sowie anschließend der neuen Komponente 4 eingelesen werden. Ein Servicetechniker könnte damit - ohne tiefergehende Kenntnisse der im System konfigurierten Szenarien, Komponenten 4 austauschen. Weiterhin denkbar ist es, dass dem Servicetechniker die bereits aufgelaufenen Betriebsstunden einer Komponente 4 im Wartungsmenü angezeigt werden, so dass er präventiv agieren kann - zum Beispiel rechtzeitig eine Batterie ersetzen kann. Schließlich ist in das System zur Heimautomatisierung zentralseitig eine Einheit 5 zur Speicherung von Status- beziehungsweise Zustandsinformationen von Komponenten 4 angebunden. In dieser Einheit 5 werden zum Beispiel Zustandsinformationen, wie der Stromverbrauch einer Komponente 4, abgespeichert. Der Nutzer kann dann auf dieser Basis zu jeder Zeit und von jedem Ort mittels Internettechnologie die Werte wahrnehmen oder auf die Werte Einfluss nehmen.

Entsprechend einer Ausbildungsform der Erfindung, welche ebenfalls anhand der Fig. 1 erläutert werden soll, kann es sich bei einer Komponente 103 um eine spezielle von gebräuchlichen Systemen der Heimautomatisierung bisher nicht bekannte Komponente handeln, welche sowohl 2D Codes erfassen beziehungsweise einlesen als auch ausgeben (anzeigen) kann. Nachfolgend soll ein möglicher Ablauf bei der Konfiguration beziehungsweise dem Management eines Szenarios (Szenario im Sinne einer Systemkonstellation mit bezüglich eines bestimmten Einsatzfalls zusammengestellten und konfigurierten Komponenten - Sensoren und Aktoren) erläutert werden. Zur Konfiguration des Szenarios werden einfach sämtliche Wunscheinstellungen der verschiedenen, neben der hier betrachteten speziellen Komponente 4 als weitere (nicht gezeigte) Komponenten vorhandenen Aktoren und Sensoren ausgewählt und eingestellt. Daraufhin wird durch die spezielle Komponente durch eine auf dieser ablaufende Programmanwendung 3 ein entsprechender 2D-Code für das eingestellte Szenario generiert und angezeigt. Der Nutzer, zum Beispiel ein Hotelgast, fotografiert beispielsweise mit seinem eigenen Smartphone den generierten 2D-Code für das entsprechenden Szenario ab und kann diesen bei Bedarf später auch einfach wieder der Komponente 4 präsentieren, um das jeweilige abgelegte Szenario 10 (erneut) einzuschalten beziehungsweise einzustellen. Hiermit ist auch eine einfache und sichere Grenze zwischen den Komponenten des Heimautomatisierungssystems und dem Nutzerequipment (Smartphone) hergestellt. Gleichzeitig müssen dem Nutzer die Heimautomatisierungskomponenten weder direkt erklärt werden, noch wird ihm die Bedienung erschwert. Die Komponente 4 muss hierbei nicht zwangsläufig über die Geräte-Kommunikation 7 mit dem Geräte-Management 1 kommunizieren, sondern kann unter Umständen auch direkt - mittels anderer Technologien, analog zum oben genannten Smartphone mit dem Geräte-Management 1 kommunizieren.

Entsprechend einer Variante dieser Ausbildungsform kann es außerdem vorgesehen sein, den 2D-Code mittels eines zum System gehörenden Druckers 6, gegebenenfalls eines speziellen 2D-Code Druckers, ausdrucken. Aber auch Varianten, bei denen der generierte 2D-Code auf einem geräteeigenen Display der Komponente 4 oder auf einem angeschlossenen Display angezeigt wird, sind möglich. Die gewissermaßen als 2D-Code Transmitter fungierende Komponente 4 stellt somit in diese Konfiguration des System den Übergang (das Gateway) des Vertrauensraumes dar, weil nutzereigene Geräte wie Smartphones damit einfach für die Steuerung der Szenarien 10 nutzbar sind (2D-Code abfotografieren und anzeigen) ohne dass diese Geräte in die Domäne des Systems der Heimautomatisierung integriert (Pairing) werden müssen. Dies kann in Einrichtungen mit wechselnden Nutzer-Szenarien, beispielsweise in Hotels, besonders hilfreich sein.

Denkbar ist es insoweit, dass 2D-Codes gewissermaßen Szenarien steuern. Hierzu wird der mit dem 2D-Code Transmitter, also der Komponente 4 generierte 2D-Code des Wunschszenarios mit dem Drucker 6 ausgedruckt und an passender Stelle "aufgeklebt". Zu einem beliebigen Zeitpunkt können mittels einer App 3 auf dem Smartphone eines Nutzers dieser Code eingelesen und die darin enthaltenen Informationen an das Geräte-Management 1 gesendet werden. Dieses stellt darauf das gewünschte Szenario 10 ein. Man kann aber auch Szenarien ohne die Verwendung des 2D-Code Transmitters (Komponente 103) physischen Schaltern oder Aktoren zuordnen. Diese könnten mit 2D-Codes ausgestattet werden, um sie wiederum in anderen Szenarien als Unterszenario zu verwenden. Damit lassen sich komplexe Szenarien in weniger komplexe untergliedern. Durch diese Verbindung von 2D-Code, Smartphone und System zur Heimautomatisierung könnten teilweise sogar Schalter eingespart werden, da der "aufgedruckte" 2D-Code die Aufgaben des Schalters beziehungsweise des Szenarios übernimmt.

## Patentansprüche

1. Verfahren zur Nutzerunterstützung beim Betreiben eines Systems der Heimautomatisierung, bei welchem Komponenten des Systems durch eine ihnen zugeordnete ID eindeutig identifizierbar sind, **dadurch gekennzeichnet, dass** die ID mit dem System betreibbarer Komponenten (4) entsprechend einer für die Nutzung des Verfahrens mit dem betreffenden System vorgegebenen Codierungsvorschrift in einem wenigstens zweidimensionalen Code codiert wird und dass zur Vornahme von Änderungen an der Systemkonfiguration durch einen Nutzer mittels eines mindestens einen optischen Sensor (2) und eine Verarbeitungseinrichtung aufweisenden, mit einem Geräte-Management (1) des Systems verbindbaren Geräts, gesteuert durch eine auf dem Gerät gestartete und von dessen Verarbeitungseinrichtung ausgeführte Programmanwendung (3), ein entsprechend der vorgenannten Codierungsvorschrift erzeugter Code erfasst wird und darin enthaltene Informationen, nämlich mindestens die ID einer mit dem System betreibbaren Komponente (4) und weitere Informationen zu dieser Komponente (4), decodiert und an das Geräte-Management (1) oder/und an eine andere Komponente des Systems übertragen werden.

2. Verfahren nach Anspruch 1, **dadurch gekennzeichnet, dass** zur Vornahme von Änderungen an der Systemkonfiguration ein mobiles, mit einem optischen Sensor (2) in Form einer Kamera ausgestattetes Endgerät verwendet wird, durch dessen Verarbeitungseinheit die Programmanwendung (3) zum Einlesen des Codes sowie zur Decodierung und Übertragung darin enthaltener Informationen verarbeitet wird.

3. Verfahren nach Anspruch 2, **dadurch gekennzeichnet, dass** ein nach der Codierungsvorschrift für die Nutzung des Verfahrens mit dem System erzeugter Code zur Einbeziehung einer neuen Komponente (4) in das System eingelesen und darin enthaltene Informationen nach ihrer Decodierung an das Geräte-Management übertragen werden, wobei dies im Rahmen eines Pairing erfolgt, bei dem zumindest die dem System hinzuzufügende Komponente (4) dem dazu in einen Pairing-Modus versetzten Geräte-Management (1) bekannt gemacht wird und neben der ID der betreffenden Komponente Informationen zu deren Art an das Gerätemanagement übertragen werden.

4. Verfahren nach Anspruch 3, **dadurch gekennzeichnet, dass** bei dem Pairing auch die hinzuzufügende Komponente (4) in einen Pairing-Modus versetzt wird und mittels des zum Einlesen des Codes, zu dessen Decodierung sowie zur Übertragung darin enthaltener Informationen an das Geräte-Management (1) verwendeten mobilen Endgeräts an die hinzuzufügende Komponente Informationen zu dem System übertragen werden, welche das mobile Endgerät von dem Geräte-Management (1) empfängt.

5. Verfahren nach einem der Ansprüche 1 bis 4, **dadurch gekennzeichnet, dass** ein nach der Codierungsvorschrift für die Nutzung des Verfahrens mit dem System erzeugter Code zur Konfigurierung einer bereits in das System einbezogenen Komponente (4) eingelesen und darin enthaltene Informationen nach ihrer Decodierung an das Geräte-Management (1) und/oder an die zu konfigurierende Komponente (4) übertragen werden.

6. Verfahren nach Anspruch 1, **dadurch gekennzeichnet, dass** ein nach der Codierungsvorschrift für die Nutzung des Verfahrens mit dem System erzeugter Code zur Konfiguration des Systems, nämlich mehrerer bereits in das System einbezogener Komponenten (4) eingelesen wird und dass darin enthaltene Informationen nach ihrer Decodierung an das Geräte-Management (1) übertragen werden, wobei es sich bei den Informationen um Konfigurationsdaten für die zu konfigurierenden Komponenten (4) und um deren zugehörigen IDs handelt.

7. Verfahren nach Anspruch 6, **dadurch gekennzeichnet, dass** der zur Konfiguration mehrerer Komponenten (4) des Systems verwendbare Code nach einer durch einen Nutzer des Systems manuell vorgenommenen Konfiguration dieser Komponenten (4) durch eine Komponente des Systems erzeugt und über ein Display oder über einen Drucker (6) dieser Komponente ausgegeben wird.

8. System der Heimautomatisierung, welches mindestens ein Geräte-Management (1) sowie einen von dem Geräte-Management verwalteten Speicher (5) mit Daten zum System gehörender Komponenten (4) umfasst und bei dem zum System gehörende oder diesem hinzuzufügende Komponenten (4) durch eine ihnen zugeordnete eindeutige ID identifizierbar sind, **dadurch gekennzeichnet, dass** die ID mit dem System betreibbarer Komponenten (4) entsprechend einer für das System vorgegebenen Codierungsvorschrift in einem wenigstens zweidimensionalen Code codiert ist, welcher mittels eines mit dem Geräte-Management (1) des Systems verbindbaren Geräts auslesbar ist, welches mit mindestens einem optischen Sensor (2), mit einer Verarbeitungseinrichtung und einer durch die Verarbeitungseinrichtung ausführbaren Programmanwendung (3) ausgestattet ist, wobei nach dem Start dieser Programmanwendung (3) der mindestens eine optische Sensor zur Erfassung des Codes aktiviert wird sowie in dem erfassten Code enthaltene Informationen decodiert und an das Geräte-Management (1) oder/und an eine Komponente (4) des Systems übertragen werden, auf welche sich die Informationen beziehen.

9. System nach Anspruch 8, **dadurch gekennzeichnet, dass** es sich beidem mit dem Geräte-Management (1) verbindbaren, mit der Programmanwendung (3) zum Erfassen des Codes und seiner Verarbeitung ausgestatteten Gerät um ein mobiles Endgerät eines Nutzers des Systems handelt, dessen mindestens einer optischer Sensor (2) eine Kamera ist.

10. System nach Anspruch 8, **dadurch gekennzeichnet, dass** es sich bei dem mit dem Geräte-Management (1) verbindbaren, mit dem mindestens einen optischen Sensor (2) und der Programmanwendung (3) zum Erfassen des Codes und seiner Verarbeitung ausgestatteten Gerät um eine Komponente (4) des Systems handelt, welche zur Erzeugung eines Codes entsprechend der für das System vorgegebenen Codierungsvorschrift ausgebildet ist, in welchem IDs und Konfigurationsdaten für mehrere Komponenten des Systems codiert sind.

11. System nach Anspruch 10, **dadurch gekennzeichnet, dass** die zur Erzeugung eines Codes entsprechend der für das System vorgegebenen Codierungsvorschrift ausgebildete Komponente (4) des Systems über ein Display und/oder über einen Drucker (6) zur Ausgabe eines von ihr erzeugten Codes verfügt, wobei das Display und/oder der der Drucker (6) unmittelbarere Bestandteil der Komponente oder mit ihr im Rahmen des Systems zugeordnet sind.
